Europäisches Patentamt

European Patent Office

Office européen des brevets

(19)

(11) Publication number: 0 330 298
A1

## (12) EUROPEAN PATENT APPLICATION

(21) Application number: 89300298.0

(22) Date of filing: 13.01.89

(51) Int. Cl.⁴: H04Q 1/14

(30) Priority: 29.01.88 GB 8802005

(43) Date of publication of application:
30.08.89 Bulletin 89/35

(84) Designated Contracting States:
DE FR IT SE

(71) Applicant: GEC PLESSEY
TELECOMMUNICATIONS LIMITED
P.O. Box 53 Telephone Road
Coventry, CV3 1HJ(GB)

(72) Inventor: Adams, David Newton
3 Armarna Drive
Allesley Coventry, CV5 9QN(GB)
Inventor: Breeze, Gerald David
7 Drybrook Close
Balsall Common West Midlands, CV7
7PY(GB)
Inventor: Reynard, Derek Thomas Duncan
42 Eastern Green Road
Coventry, CV5 7LH(GB)

(74) Representative: MacKenzie, Ian Alastair
Robert
The General Electric Company, p.l.c. Central
Patent Department Wembley Office Hirst
Research Center East Lane
Wembley Middlesex HA9 7PP(GB)

(54) Distribution block.

(57) The invention concerns a distribution block of
the kind used in telephone exchanges. The block
comprises a plurality of plate modules (21 and 28)
mounted in a stack. Two of the modules are plates
(21, 27) each provided with plurality of separate
paths (31) through which wires which are to be
electrically connected can pass. The plates (21, 27)
are separated by other modules (22, 23, 24) capable
of mounting means (45, 61) whereby wires located in
said plate-like modules (21, 27) can be connected.

Fig.3.

Xerox Copy Centre

## Distribution Box

The present invention concerns distribution blocks employed in telephone exchanges. Such blocks are used to convert incoming lines often known as "sheet cables" to the internal equipment cables of the exchange.

Such distribution blocks have a number of requirements which may vary from exchange to exchange. For example it is normal to associate protection equipment with the incoming lines so that the expensive and relatively delicate equipment in the exchange can be protected from damage by power surges in the incoming lines. These power surges can be caused in a number of different ways such as lightning strikes or inadvertent coupling to mains lines.

The present invention relates to such a distribution block which besides provided ready access to the cabling to be interconnected, also allows optional protection schemes.

In order that the invention may be more readily understood, an embodiment thereof will now be described by way of example and with reference to the accompanying drawings, in which

Figure 1 is a perspective view of a monitoring frame,

Figure 2 is a similar view of a module for mounting in the mounting frame of Figure 1,

Figure 3 is a front view of the module of Figure 2 in exploded form,

Figures 4, 5, 6 and 7 are perspective views of components of the module of Figure 2,

Figure 8 is a perspective view of a contact spring,

Figure 9 is a similar view of a protection element for use with the module, and

Figure 10 is a section through the module showing the protection element of Figure 9 in use.

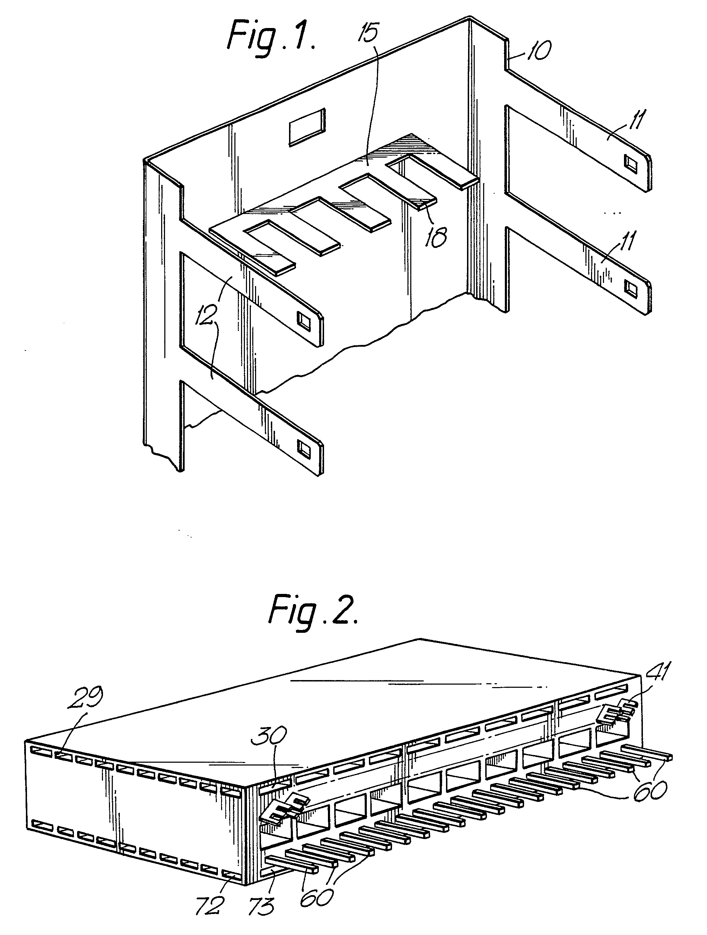

Referring now to Figure 1 of the drawings this shows a frame 10 on which a plurality of modules can be mounted to provide a distribution box for connecting external lines to internal equipment in a telephone exchange. The frame 10 has pairs of limbs 11, 12 with eeach pair intended to carry a single module.

The frame 10 also includes earth contact strips 15 having a series of projecting teeth 18. The earth contact strips are optional and are fitted when the distribution box is to be used with protector elements.

The limbs 11, 12 of the frame 10 are capable of mounting a wide range of connector modules to suit the needs of different systems. They can be provided with a wide range of latching devices.

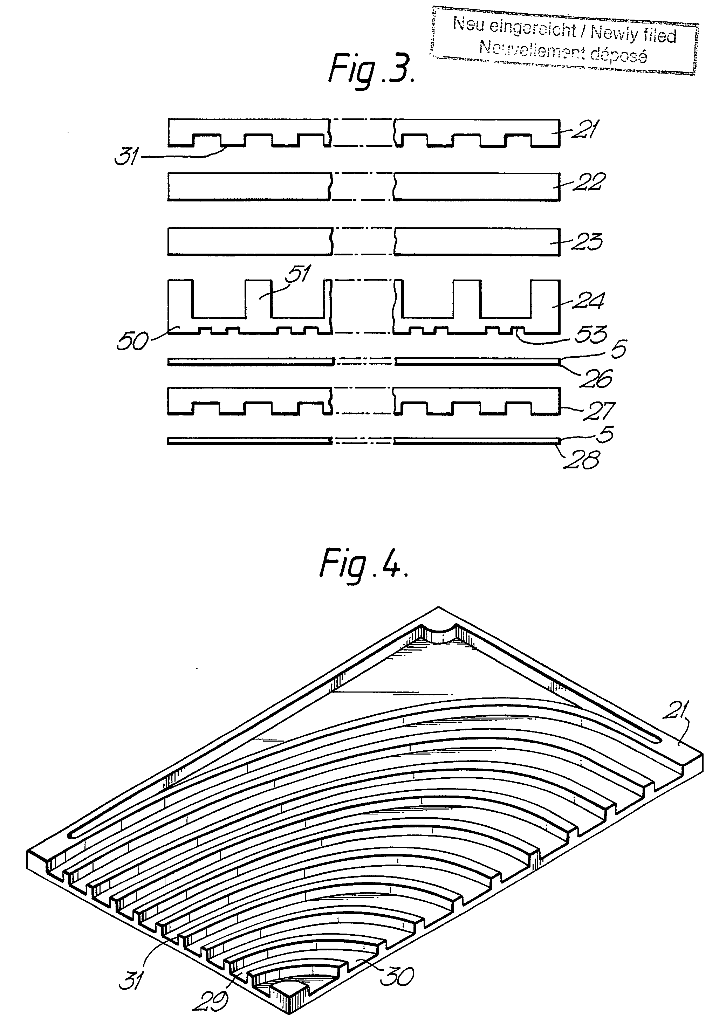

A basic connector module 20 is shown in Figure 2 of the drawings and in exploded form in Figure 3.

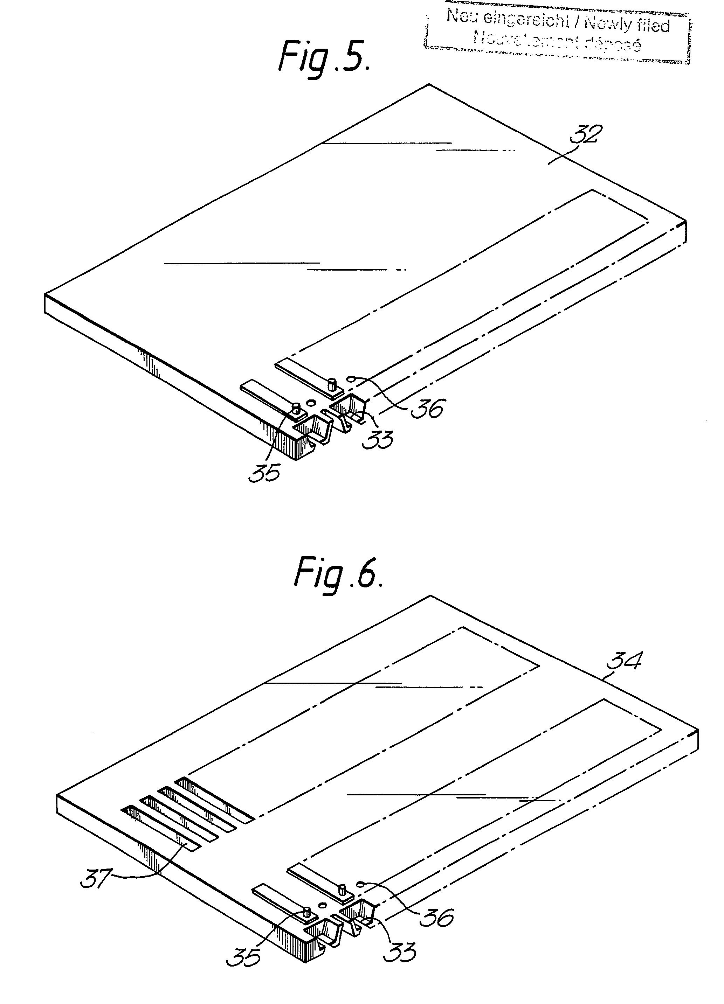

The module consists of seven individual layers 21 to 28. The first of these layers is a quadrant plate 21 of the kind shown in Figure 4 of the drawings. This plate 21 has a series of openings 29 into which pairs of wires from external lines can be paired, and then bent through $90^{\circ}$ to exit at apertures 30. The wires are guided by curved guides 31. The next layer 22 is shown in Figure 5 and is a plate 32 of thermoplastics material having a series of angled recesses 33. Plate 32 is arranged to cooperate with a virtually mirror image plate 34 shown in Figure 6 and also having recesses 33 and which provides layer 23 of the module. The two plates 32, 34 have respective pins 35 and mating recesses 36 which act to locate the plates 32, 34 accurately. Plate 34 also has a series of rectangular openings 37, there being two such openings for each recess 33.

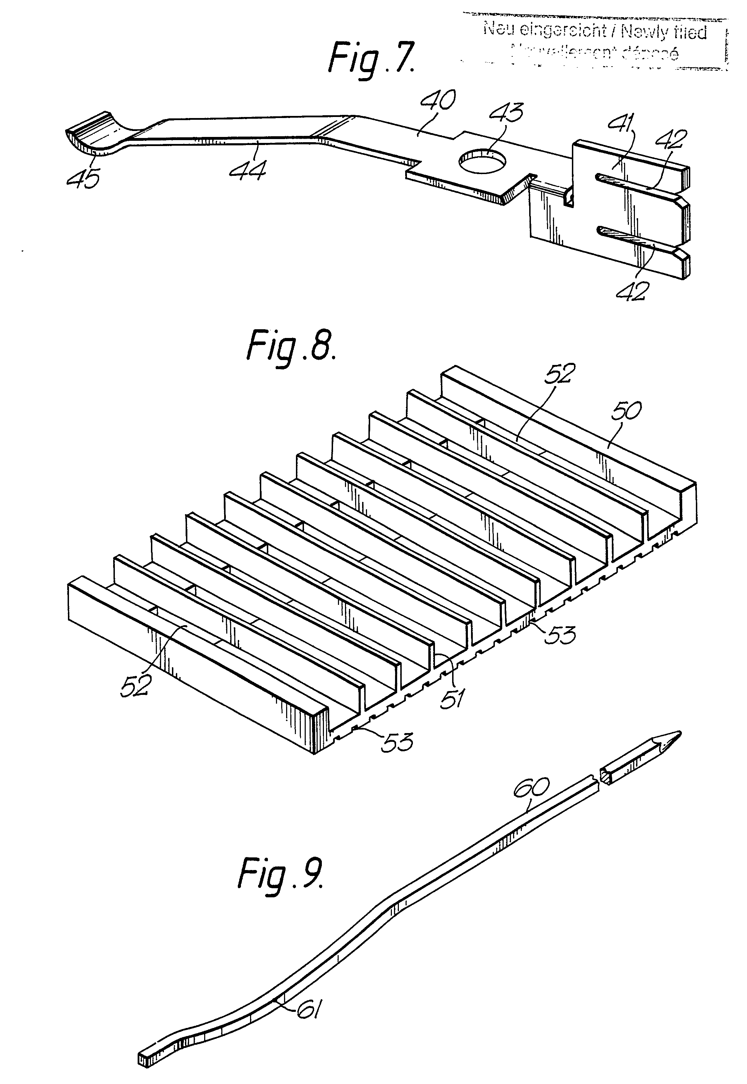

When the module is assembled the plates trap between them a series of spring contacts 40. One of these is shown in Figure 7. The contact 40 has a head 41 provided with two slots 42 for recessing wires. It also has a hole 43 by means of which it can be located on plate 34 and a spring stem 44 within the assembled module pairs through the associated rectangular opening 36 in plate 34. The stem terminates in a curved contact end 45.

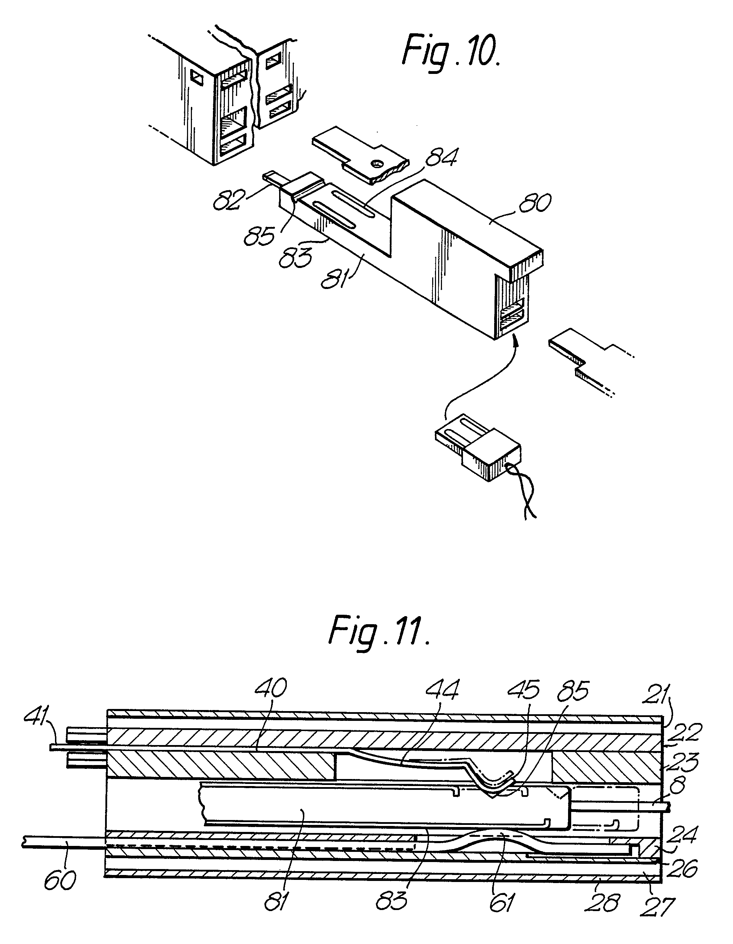

The next element in the module is shown in Figure 8. It provides layer 24 of the module and comprises a thermoplastics moulding 50 divided by transverse walls 51 into a series of guide chambers, each chamber having in its base a rectangular opening 52. The base of plate 50 is formed in a series of ridges 53 each of which is designed to hold a wire rap permanent connection tag of the kind shown in Figure 9 of the drawings. The tag 60 shown in the figure has a curved portion 61 which projects through the corresponding opening 52 in the base of plate 50. The tags 60 are held in place by the element which forms the fifth layer 26 of the module. This element is a simple plate 70 also of thermoplastics material. In the construction of the module the plate 70 is followed by layer 27 which is a quadrant plate 71 similar to plate 21 shown in Figure 4 of the drawings and providing entrance apertures 72 for wires leading from the exchange with which the distribution block is associated and exit apertures 73 adjacent to the tags 60. The final layer 28 of the module is a plate 74 identical to plate 70.

The module the composition of which has just been described is intended for use with protection elements of the kind shown in Figure 10 of the drawings.

This protection element consists of a main body 80 housing, for example, a voltage surge protection element such as a gas tube. Extending from this main body 80 is a stem 81 having at its end an earth contact 82 which in operation contacts the earth contact strips 15 of frame 10. The underside of stem 81 carries a linear contact rail 83 which is shown in Figure 11 of the drawings whilst the upper side of stem 81 is notched at 83. The reason for this will be explained later. Finally, the upper side of stem 81 is also provided with contact rails 84. The operation of the protection element can best be understood with regard to Figure 11 of the drawings.

Figure 11 is a section showing a protection element in one of its two operative positions in the assembled module. This figure clearly shows the assembled relationship of the various layers already described together with the internal disposition of the spring contacts 40 and tags 60.

In Figure 11 the layer 26 has been omitted as it is not totally essential. When the module is being used pairs of wires from external lines are inserted into inlet apertures 29 and exit at apertures 30 where they are joined to heads 41 by use of the slots 42. Similarly lines from the internal equipment of the exchange can be fed into apertures 72 to exit at 73 for connection to tags 60, there being two heads 41 and two tags 60 for each respective outlet apertures 30, 73. As will be appreciated there is no electrical contact between the two sets of wires until the protection elements of the kind shown in Figure 10 are inserted into the guide channels formed in plate 50 which provides layer 24 of the module. These channels are dimensioned so that stem 81 of element 80 is a close sliding fit, the main body of the protection element remaining outside the module. When fully inserted into a guide channel, the earth contact 82 of a protection element will engage the corresponding one of the teeth 18 of the earth contact strip 15. Furthermore the upper contact rails 84 of stem 81 engage the contact ends 45 of the two contact strips 40 associated with that particular guide channel and the lower contact rails 83 engage the curved portions 61 of the appropriate pair of tags 60. It can thus be seen that the incoming wires from both the exterior and the exchange only come into electrical connection when the protection elements are inserted.

For test purposes it may be appropriate to disconnect the external wires connected to the upper part of the module whilst retaining contact between contact rails 83 and tags 60. This is achieved by withdrawing the protection element 80 to the position shown in non-dotted lines in which the contact end 45 of the contact strip 40 mates with the notch 83. In this position the upper contact rails 82 are no longer in engagement with the contact but the lower rails 83 remain in contact with the tags 60.

It will be appreciated that the modular design just described gives great flexibility. By rearranging the quadrant plates it is possible to alter the sides to which lines from either the exterior or the exchange are inserted into the module.

It will also be appreciated that the modules when in position on the mounting frame give a user ready access to all the various connection points from the front of the module.

## Claims

1. A distribution block comprising a plurality of plate modules (21 and 28) mounted in a stack and characterised in that two of the modules are plates (21, 27) each provided with plurality of separate paths (31) through which wires which are to be electrically connected can pass, and the plates (21, 27), being separated by other modules (22, 23, 34) capable of mounting means (45, 61) whereby wires located in said plate-like modules (21, 27) can be connected.

2. A distribution block as claimed in Claim 1 and characterised in that at least one of said modules (51) includes guide chambers for receiving protection modules (80), the protection modules (80) having a dual function of in one position providing contact between incoming and outgoing wires and in a second position of allowing partial disconnection of the wires.

3. The distribution block as claimed in Claim 2 and characterised in that each protection module (20) may be latched in a partially extracted position by engagement with electrical contacts (40) within the block.

Neu eingereicht / Newly filed
Nouvellement déposé

*Fig.1.*

15 10 11 11 18 12

*Fig.2.*

29 30 41 60 72 73 60 60

Neu eingereicht / Newly filed
Nouvellement déposé

*Fig.3.*

*Fig.4.*

Neu eingereicht / Newly filed
Nouvellement déposé

# Fig.5.

# Fig.6.

Neu eingereicht / Newly filed
Nouvellement déposé

Fig .7.

40  43  41  42

45  44  42

Fig .8.

52  50

52  53

51  53

60

Fig .9.

61

Neu eingereicht / Newly filed

*Fig .10.*

*Fig .11.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 048 144 (SIEMENS)<br>* Page 6, line 14 - page 9, line 22; figure 1 *<br>--- | 1-3 | H 04 Q 1/14 |
| Y | EP-A-0 204 675 (ADC TELECOMMUNICATIONS)<br>* Figures 1-3; page 9, line 18 - page 11, line 15 *<br>--- | 1-3 | |
| X | DE-A-2 048 104 (SIEMENS)<br>* Page 4, line 21 - page 8, line 12 *<br>--- | 1 | |
| A | FR-A-2 341 974 (CAUSSE)<br>* Page 2, line 35 - page 5, line 35 *<br>--- | 1-3 | |
| A | GB-A-2 140 221 (ALLIED CORP.)<br>* Page 2, lines 73-105 *<br>----- | 2-3 | |

TECHNICAL FIELDS SEARCHED (Int. Cl.4)

H 04 Q

The present search report has been drawn up for all claims

| Place of search | Date of completion of the search | Examiner |
|---|---|---|
| THE HAGUE | 21-03-1989 | VANDEVENNE M.J. |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons
 
& : member of the same patent family, corresponding
 document

EPO FORM 1503 03.82 (P0401)